# EUROPEAN PATENT APPLICATION

(11) **EP 2 611 145 A1**
(43) Date of publication of application: **03.07.2013**
(21) Application number: 12177436.8
(22) Date of filing: 23.07.2012
(51) Int. Cl.: H04N 5/765, H04N 5/775, H04N 21/433

(54) **Recording system and recording method**

(30) Priority: 26.12.2011 JP 2011284255
(71) Applicant: Kabushiki Kaisha Toshiba, Tokyo 105-8001 (JP)
(72) Inventor: Hatano, Taishi, Tokyo, 105-8001 (JP); Tokunaga, Akinori, Tokyo, 105-8001 (JP); Yoshida, Osamu, Tokyo, 105-8001 (JP)
(74) Representative: HOFFMANN EITLE

(57) **Abstract**

According to one embodiment, a recording method includes: recording, by a recording controller (106), programs on channels simultaneously on a recording medium (110); accepting a setting target of setting information related to simultaneous recording between a device (11) recording programs on channels simultaneously on a recording medium and the recording controller (106); and setting the setting information to the setting target when a first method is selected, and setting the setting information to the device (11) or the recording controller (106) based on first recording capacity of the recording medium on which the device (11) performs simultaneous recording and second recording capacity of the recording medium (110) on which the recording controller (106) performs simultaneous recording is selected when a second method is selected, wherein the recording includes recording the programs on the recording medium (110) in accordance with the setting information set to the recording controller (106).

## Description

### FIELD

Embodiments described herein relate generally to a recording device and a recording method.

### BACKGROUND

Digital televisions having a simultaneous recording function to record programs on a plurality of channels simultaneously have been disclosed. At the same time, recorders having the simultaneous recording function have been also developed. As a result, both the digital televisions and the recorders have the simultaneous recording function. It will be likely that a user possesses a plurality of devices having the simultaneous recording function.

For the benefit of users who possess a plurality of devices having the simultaneous recording function, a technology has been developed for integrating a plurality of simultaneous recording functions of the devices into one simultaneous recording function by sharing, among the devices, management information (recording capacity of a recording medium on which each of the devices perform simultaneous recording) and setting information (channels to be recorded simultaneously and recording time thereof) of the devices to cause the devices to set the setting information in cooperation with each other.

Specifically, if a user possesses a plurality of devices having the simultaneous recording function, and the devices are connected in an environment capable of transferring data, concentrating the management information and the setting information of the devices in a single device makes it possible to set the setting information of the devices with the single device in accordance with information input by the user. Conventionally, to set setting information to devices having the simultaneous recording function, a user needs to set the setting information by starting and operating each of the devices. By contrast, the configuration described above enables the user to set the setting information of each of the devices individually while confirming the setting information set to the other devices with the single device.

Furthermore, if the user possesses a plurality of devices having the simultaneous recording function, and the devices are connected in an environment capable of transferring data, it is also possible to concentrate the management information and the setting information of the devices in a single device and to set the setting information automatically by using the management information. This configuration makes it possible to set the setting information of each of the devices collectively and to set channels whose programs are to be recorded and recording time thereof exclusively among the devices.

If a plurality of devices having the simultaneous recording function are connected in an environment capable of transferring data, it is required that a user can select one of the following setting methods: a setting method for setting the setting information of the devices with a single device in accordance with information input by the user and a setting method for setting the setting information of each of the devices automatically in accordance with the management information of each of the devices.

In view of the circumstances described above, it is needed to provide a recording device and a recording method that allow a user to set setting information of each device by a setting method desired by the user and that can reduce trouble of the user setting the setting information of each device.

### SUMMARY

To overcome the problems and achieve the object mentioned above, according to an embodiment, a recording device connected to a device configured to record programs on a plurality of channels simultaneously on a recording medium, the recording device comprises: a recording controller configured to record programs on a plurality of channels simultaneously on a recording medium; a first accepting module configured to accept setting information related to simultaneous recording performed by the device and the recording controller; a second accepting module configured to accept a setting target of the accepted setting information between the device and the recording controller; a first acquiring module configured to acquire capacity information indicating first recording capacity of the recording medium on which the device performs simultaneous recording; a selector configured to select a first setting method for setting the accepted setting information to the accepted setting target or a second setting method for setting the accepted setting information to the device or the recording controller based on the first recording capacity indicated by the acquired capacity information and second recording capacity of the recording medium on which the recording controller performs simultaneous recording; a setting module configured to set the accepted setting information to the accepted setting target when the first setting method is selected, and set the accepted setting information to the device or the recording controller based on the first recording capacity and the second recording capacity when the second setting method is selected; and a transmitter configured to transmit the setting information set to the device to the device, wherein the recording controller is configured to record the programs on the channels simultaneously on the recording medium in accordance with the accepted setting information set to the recording controller.

According to another embodiment of the invention, a recording method executed in a recording device connected to a device configured to record programs on a plurality of channels simultaneously on a recording medium, the recording method comprises: recording, by a recording controller, programs on a plurality of channels simultaneously on a recording medium; accepting, by a first accepting module, setting information related to simultaneous recording performed by the device and the recording controller; accepting, by a second accepting module, a setting target of the accepted setting information between the device and the recording controller; acquiring, by a first acquiring module, capacity information indicating first recording capacity of the recording medium on which the device performs simultaneous recording; selecting, by a selector, a first setting method for setting the accepted setting information to the accepted setting target or a second setting method for setting the accepted setting information to the device or the recording controller based on the first recording capacity indicated by the acquired capacity information and second recording capacity of the recording medium on which the recording controller performs simultaneous recording; setting, by a setting module, the accepted setting information to the accepted setting target when the first setting method is selected, and setting the accepted setting information to the device or the recording controller based on the first recording capacity and the second recording capacity when the second setting method is selected; and transmitting, by a transmitter, the setting information set to the device to the device, wherein the recording includes recording the programs on the channels simultaneously on the recording medium in accordance with the accepted setting information set to the recording controller.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic diagram of a configuration of a recording system in which a plurality of devices that record a plurality of channels simultaneously are connected according to the present embodiment;
FIG. 2 is an exemplary block diagram of a configuration of a digital television in the embodiment;
FIG. 3 is an exemplary block diagram of a detailed configuration of a tuner in the embodiment;
FIG. 4A is an exemplary block diagram of a functional configuration of a system controller in the embodiment;
FIG. 4B is an exemplary flowchart illustrating a flow of processing for setting channels by manual setting or automatic setting in the embodiment;
FIG. 4C is an exemplary flowchart illustrating a flow of processing for setting recording time by the manual setting or the automatic setting in the embodiment;
FIG. 5 is an exemplary schematic diagram of a channel setting screen when channels to be recorded simultaneously by a recorder and a loop recording module are set by the manual setting in the embodiment;
FIG. 6 is an exemplary schematic diagram of a channel confirmation screen when the channels to be recorded simultaneously by the recorder and the loop recording module are set by the manual setting in the embodiment;
FIG. 7 is an exemplary schematic diagram of a recording time setting screen when recording time in which simultaneous recording is performed by the recorder and the loop recording module is set by the manual setting in the embodiment;
FIG. 8 is an exemplary schematic diagram for explaining simultaneous recording in each device in accordance with setting information set by the manual setting in the embodiment;
FIG. 9 is an exemplary schematic diagram of the channel setting screen when channels to be recorded simultaneously are set by the automatic setting in the embodiment;
FIG. 10 is an exemplary schematic diagram of the channel confirmation screen when the channels to be recorded simultaneously are set by the automatic setting in the embodiment;
FIG. 11 is an exemplary schematic diagram of the recording time setting screen when recording time to perform simultaneous recording is set by the automatic setting in the embodiment;
FIG. 12 is an exemplary schematic diagram of a recording time confirmation screen when the recording time to perform simultaneous recording is set by the automatic setting in the embodiment;
FIG. 13 is an exemplary schematic diagram for explaining simultaneous recording performed by each device based on the channels set by the manual setting and the recording time set by the automatic setting in the embodiment;
FIG. 14 is an exemplary schematic diagram for explaining simultaneous recording performed by each device based on the channels set by the automatic setting and the recording time set by the manual setting in the embodiment;
FIG. 15 is an exemplary schematic diagram for explaining another simultaneous recording performed by each device based on the channels and the recording time set by the automatic setting in the embodiment;
FIG. 16 is an exemplary schematic diagram of a past program guide in which program information of the programs recorded simultaneously by the recorder and the loop recording module is listed in the embodiment;
FIG. 17 is an exemplary schematic diagram for explaining processing for acquiring the program information of the programs recorded simultaneously by the recorder and the loop recording module in the embodiment; and
FIG. 18 is an exemplary schematic diagram for explaining processing for scrolling the past program guide in which the program information of the programs recorded simultaneously by the recorder and the loop recording module is listed in the embodiment.

### DETAILED DESCRIPTION

Exemplary embodiments of a recording device and a recording method according to the present embodiment are described below in greater detail with reference to the accompanying drawings.

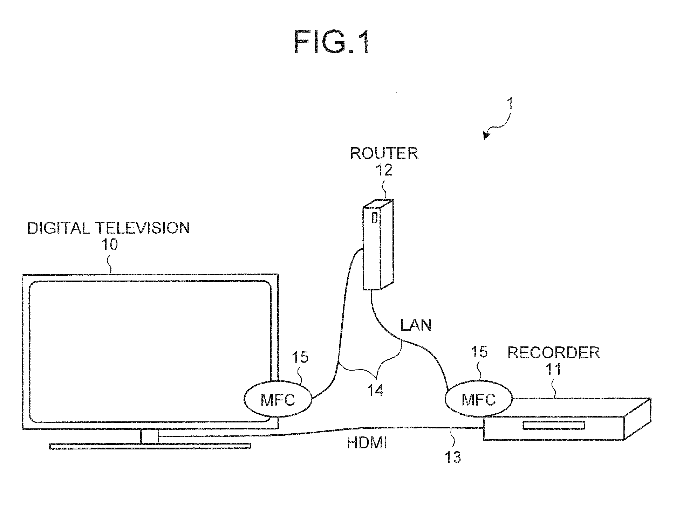

FIG. 1 is a schematic diagram of a configuration of a recording system in which a plurality of devices that record a plurality of channels simultaneously are connected according to the present embodiment. If a plurality of devices having a simultaneous recording function to record a plurality of channels simultaneously are present, a recording system 1 according to the present embodiment can use the simultaneous recording functions of the devices as one simultaneous recording function. The recording system 1 according to the present embodiment comprises a recorder 11 (device) and a digital television 10 (recording device). The recorder 11 performs a simultaneous recording function to record a plurality of channels simultaneously on a recording medium, such as a hard disk drive (HDD) provided to the recorder 11 and an external HDD, as a device having the simultaneous recording function. The digital television 10 performs a simultaneous recording function to record a plurality of channels simultaneously.

Between the devices having the simultaneous recording function, a path for transmitting data is provided. Examples of the data include setting information related to simultaneous recording, such as channels to be recorded simultaneously by the recorder 11 and recording time thereof, and program information (hereinafter, referred to as first program information) indicating programs to be recorded simultaneously by the recorder 11. The recorder 11 records programs on a plurality of channels simultaneously in accordance with the setting information transmitted from the digital television 10. In the present embodiment, a high-definition multimedia interface (HDMI) 13 and a local area network (LAN) 14 via a router 12 are used as the path for transmitting data between the devices. In the present embodiment, the HDMI 13 and the LAN 14 are used as the path for transmitting data between the devices. However, the path is not limited thereto, and any path may be used as long as it can transmit data. The digital television 10 and the recorder 11 comprise an MFC module 15 as a function to transmit and receive the setting information and to acquire the first program information by using the HDMI 13 and the LAN 14.

In the present embodiment, the recorder 11 and the digital television 10 are used for the recording system 1 in which a plurality of devices having the simultaneous recording function are connected. However, the recording system 1 may be any system in which a plurality of devices having the simultaneous recording function are connected. For example, the recording system 1 may be a system in which digital televisions are connected or a system in which recorders are connected. Furthermore, in the present embodiment, two devices are connected in the recording system 1. Alternatively, two or more devices may be connected in the recording system 1, and the number of devices is not limited. In the description below, the digital television 10 will be explained as an example of the device having the simultaneous recording function. The other device (recorder 11) connected to the digital television 10 has the same configuration as that of the digital television 10.

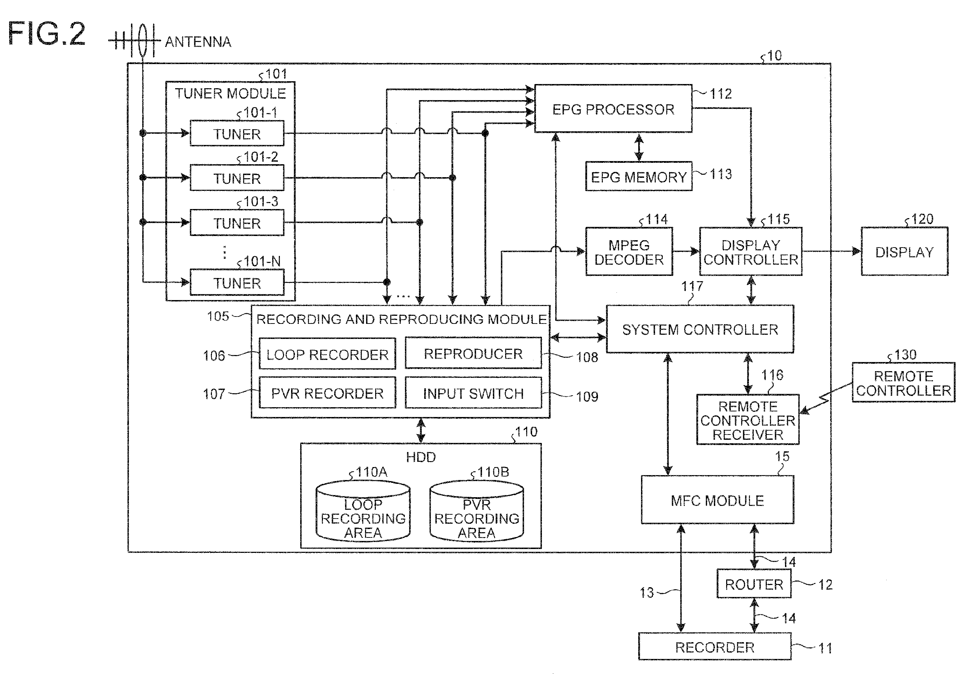

FIG. 2 is a block diagram of an example of a configuration of the digital television in the embodiment. In the description below, while the configuration of the digital television 10 is explained, the recorder 11 has nearly the same configuration as that of the digital television 10. As illustrated in FIG. 2, the digital television 10 according to the present embodiment comprises a tuner module 101, a recording and reproducing module 105, an HDD 110, an electric program guide (EPG) processor 112, an EPG memory 113, a moving picture experts group (MPEG) decoder 114, a display controller 115, a remote controller receiver 116, a system controller 117, and the MFC module 15.

The tuner module 101 receives a transport stream serving as content data in which content data, such as a program, and control data are multiplexed from a broadcasting station.

In the present embodiment, the tuner module 101 comprises tuners 101-1 to 101-N (N is a natural number) . The tuners 101-1 to 101-N receive a transport stream on channels Ch1 to ChN, respectively. The tuners 101-1 to 101-N output the transport stream on the channels Ch1 to ChN, respectively, to the recording and reproducing module 105 and the EPG processor 112.

The tuners 101-1 to 101-N in the present embodiment will now be described in detail. Because the tuners 101-1 to 101-N have the same configuration, the tuner 101-1 is described as an example.

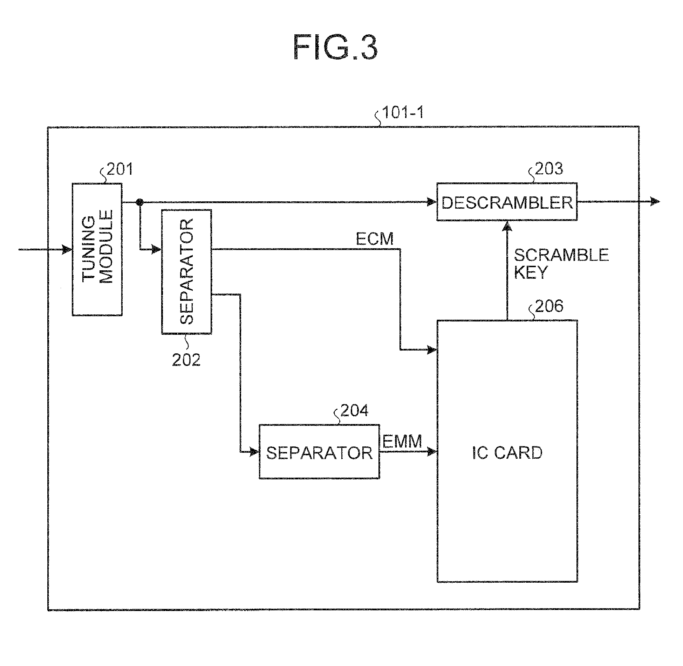

FIG. 3 is a block diagram of an example of a detailed configuration of the tuner in the embodiment. As illustrated in FIG. 3, the tuner 101-1 comprises a tuning module 201, a separator 202, a descrambler 203, a separator 204, and an integrated circuit (IC) card 206.

The tuning module 201 selects antenna input, and outputs a transport stream of a channel thus selected to the separator 202 and the descrambler 203.

The separator 202 separates control data ECM multiplexed in the transport stream received from the tuning module 201, and outputs the control data ECM thus separated to the IC card 206. Furthermore, the separator 202 outputs the transport stream received from the tuning module 201 to the separator 204. The separator 204 separates control data EMM multiplexed in the transport stream received from the separator 202, and outputs the control data EMM thus separated to the IC card 206.

The IC card 206 uses the control data ECM received from the separator 202 and the control data EMM received from the separator 204 to decode a scramble key. The descrambler 203 uses the scramble key decoded by the IC card 206 to descramble content data multiplexed in the transport stream, and outputs the content data. In the present embodiment, the IC card 206 is provided to each of the tuners 101-1 to 101-N. Alternatively, the IC card 206 may be shared by a plurality of tuners.

Referring back to FIG. 2, the recording and reproducing module 105 extracts content data from the transport streams on the channels Ch1 to ChN to be recorded, and performs recording and reproducing. The recording and reproducing module 105 comprises a loop recorder 106, a personal video recorder (PVR) recorder 107, a reproducer 108, an input switch 109, and the like.

The loop recorder 106 employs a loop recording method in which recording is performed continuously on a recording area formed in a loop shape conceptually, and overwriting is performed on a recording area on which data has already been recorded. The loop recorder 106, for example, records content data on the HDD 110 and an external HDD (not illustrated) via the MFC module 15 continuously for 24 recording hours. The HDD 110 and the external HDD (not illustrated) have the same configuration, and comprise a loop recording area 110A and a PVR recording area 110B.

The loop recorder 106 records content data on the loop recording area 110A in the HDD 110 or the external HDD (not illustrated) from the beginning in order. If the content data is recorded to the end of the area, the loop recorder 106 records (overwrites) content data thereon from the beginning again.

The loop recorder 106 can be configured to delete the content data recorded on the loop recording area 110A in the HDD 110 or the external HDD (not illustrated) after certain recording time has elapsed. Furthermore, the loop recorder 106 also can be configured to delete the content data recorded on the loop recording area 110A when the capacity of the content data exceeds predetermined capacity.

The loop recorder 106 accepts recording time included in setting information set by the system controller 117, which will be described later, and simultaneously records transport streams (programs) on a plurality of channels received by the tuner module 101 within the recording time thus accepted on the loop recording area 110A in the HDD 110 or the external HDD (not illustrated) by the loop recording method. Furthermore, the loop recorder 106 accepts channels included in the setting information set by the system controller 117, which will be described later, and simultaneously records a plurality of transport streams (programs) on the channels thus accepted on the loop recording area 110A in the HDD 110 or the external HDD (not illustrated) by the loop recording method. In other words, the loop recorder 106 corresponds to a recording controller that records a plurality of channels simultaneously on a recording medium, such as the HDD 110 or the external HDD (not illustrated) . The loop recorder 106 performs simultaneous recording in accordance with the setting information set by the system controller 117, which will be described later. The setting information is information related to simultaneous recording, such as channels to be recorded simultaneously by the loop recorder 106 and recording time thereof.

The PVR recorder 107 records a transport stream on the HDD 110 by a PVR recording method, which is a normal recording method. Specifically, the PVR recorder 107 records the transport stream on the PVR recording area 110B in the HDD 110. The PVR recorder 107 does not delete the transport stream recorded on the PVR recording area 110B but saves the transport stream until the system controller 117, which will be described later, instructs the PVR recorder 107 to delete the transport stream.

The loop recorder 106 and the PVR recorder 107 adds information, such as channel information indicating a channel of a program whose transport stream is recorded, a program name of a program whose transport stream is recorded, recording date and time when a transport stream is recorded, and a reproduction history of content data, to a transport stream, and records the transport stream on the loop recording area 110A and the PVR recording area 110B, respectively, in the HDD 110.

The reproducer 108 reproduces content data extracted from the transport streams on the channels Ch1 to ChN to be recorded, and outputs the content data to the MPEG decoder 114. Furthermore, the reproducer 108 reproduces content data (program) received from the recorder 11 or the HDD 110 via the system controller 117 and the MFC module 15, and outputs the content data to the MPEG decoder 114.

If the first program information is selected from the first program information and the second program information listed in a past program guide displayed by the EPG processor 112, which will be described later, the input switch 109 reads content data indicated by the first program information thus selected from the recorder 11, and inputs the content data to the reproducer 108. By contrast, if the second program information is selected from the first program information and the second program information listed in the past program guide displayed by the EPG processor 112, which will be described later, the input switch 109 reads content data indicated by the second program information thus selected from the HDD 110, and inputs the content data to the reproducer 108. The first program information indicates programs on channels recorded simultaneously by the recorder 11, whereas the second program information indicates programs on channels recorded simultaneously by the loop recorder 106.

The EPG processor 112 extracts EPG information, which is the first program information (SI information) indicating a program in each recording time on each channel, from the transport streams on the channels Ch1 to ChN to be recorded, and stores the first program information in the EPG memory 113. Furthermore, to update the EPG information stored in the EPG memory 113 with new information constantly, the EPG processor 112 extracts the EPG information from the transport streams on the channels Ch1 to ChN, and updates the EPG information stored in the EPG memory 113 with the EPG information thus extracted.

In the present embodiment, the EPG information of each channel is extracted from each of the transport streams on the channels Ch1 to ChN to be recorded similarly to Japanese digital terrestrial broadcasting. However, the method for extracting the EPG information is not limited thereto. The EPG information of all broadcasting satellite (BS) channels may be multiplexed in each channel like BS digital broadcasting, for example. In any case, the EPG processor 112 extracts the EPG information for the number of channels that can be received by the EPG processor 112 itself, and stores the EPG information in the EPG memory 113.

Furthermore, the EPG processor 112 receives a display instruction of a program guide from the system controller 117, which will be described later, and acquires the EPG information stored in the EPG memory 113. The EPG processor 112 then outputs program guide data of a program guide (including a past program guide, which will be described later) in which the EPG information thus acquired is listed for each channel in chronological order to the display controller 115.

The MPEG decoder 114 performs MPEG2 decoding on the transport stream received from the recording and reproducing module 105, and outputs the transport stream to the display controller 115.

The display controller 115 outputs the program guide data output from the EPG processor 112 and the transport stream output from the MPEG decoder 114 to a display 120 as a television signal.

In the present embodiment, a list of transport streams (programs) on a plurality of channels recorded simultaneously by the loop recording method is created by the system controller 117 in a program guide format, and is displayed on the display 120 by the display controller 115. By contrast, a list of transport streams recorded by the PVR recording method is created by the recording and reproducing module 105, and is displayed on the display 120 by the display controller 115.

The display 120 displays a program based on the television signal received from the display controller 115, and displays the list of the transport streams (programs) on the channels recorded simultaneously by the loop recording method and the list of the transport streams recorded by the PVR recording method. The display 120 is realized by a liquid crystal display (LCD), a plasma display, an organic electroluminescence (EL) display, or the like.

The remote controller receiver 116 receives input of recording time and channels to be recorded simultaneously by the loop recording method, an instruction for recording by the PVR recording method, an instruction for deletion of content data recorded by the PVR recording method, an instruction for reproduction of a transport stream recorded on the HDD 110, an instruction for display of a list of programs recorded on the loop recording area 110A and a list of programs recorded on the PVR recording area 110B, and the like from a remote controller (hereinafter, referred to as a remote controller) 130 and notifies the instructions to the system controller 117.

The system controller 117 controls the whole of the digital television 10. The system controller 117, for example, receives notification from the remote controller receiver 116, and performs control and issues an instruction for each module of the digital television 10 in accordance with the notification from the remote controller receiver 116.

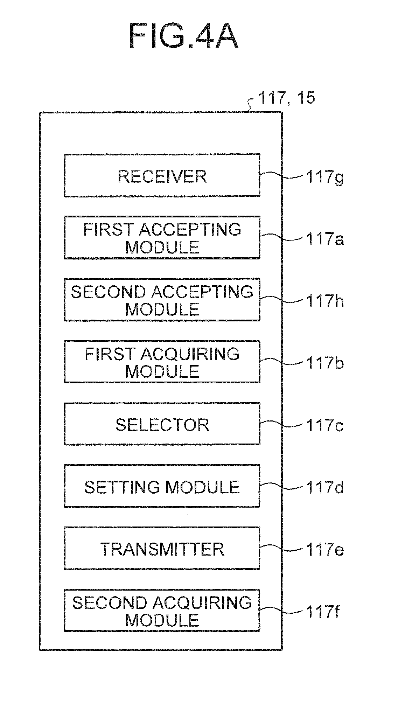

FIG. 4A is a block diagram of a functional configuration of the system controller and the MFC module in the embodiment. The system controller 117 and the MFC module 15 comprise a receiver 117g, a first accepting module 117a, a second accepting module 117h, a first acquiring module 117b, a selector 117c, a setting module 117d, a transmitter 117e, and a second acquiring module 117f.

The receiver 117g is realized by the MFC module 15, and receives setting information set to the recorder 11 from the recorder 11 by using the HDMI 13 or the LAN 14.

The first accepting module 117a is realized by the system controller 117. The first accepting module 117a accepts setting information related to simultaneous recording performed by the recorder 11 and the loop recorder 106, such as channels to be recorded simultaneously by the recorder 11 and the loop recorder 106 and recording time thereof, in accordance with an operation of the remote controller 130.

The second accepting module 117h is realized by the system controller 117. The second accepting module 117h accepts a setting target or a setting destination to which the setting information accepted by the first accepting module 117a is to be set between the loop recorder 106 and the recorder 11 in accordance with an operation of the remote controller 130.

The first acquiring module 117b is realized by the MFC module 15, and acquires capacity information indicating first recording capacity of a recording medium, such as an HDD, on which the recorder 11 performs simultaneous recording. In the present embodiment, the first acquiring module 117b acquires the capacity information indicating the first recording capacity from the recorder 11. Furthermore, in the present embodiment, the first acquiring module 117b acquires capacity information indicating second recording capacity of the HDD 110 (loop recording area 110A) on which the loop recorder 106 performs simultaneous recording from the recording and reproducing module 105.

The selector 117c is realized by the system controller 117. The selector 117c selects manual setting (a first setting method) for setting the setting information accepted by the first accepting module 117a to the setting target accepted by the second accepting module 117h (at least one of the loop recorder 106 and the recorder 11) or automatic setting (a second setting method) for setting the setting information accepted by the first accepting module 117a to the recorder 11 or the loop recorder 106 based on the first recording capacity and the second recording capacity indicated by the capacity information acquired by the first acquiring module 117b.

The setting module 117d is realized by the system controller 117. The setting module 117d uses the setting method selected by the selector 117c to set the setting information accepted by the first accepting module 117a to the recorder 11 or the loop recorder 106. The setting module 117d then transmits the setting information thus set to the loop recorder 106, and instructs the loop recorder 106 to perform simul taneous recording in accordance with the setting information thus set. More specifically, if the manual setting is selected, the setting module 117d sets the setting information accepted by the first accepting module 117a to the setting target accepted by the second accepting module 117h. By contrast, if the automatic setting is selected, the setting module 117d sets the setting information accepted by the first accepting module 117a to the recorder 11 or the loop recorder 106 based on the first recording capacity and the second recording capacity indicated by the capacity information acquired by the first acquiring module 117b.

In the present embodiment, if the manual setting is selected, the setting module 117d sets the channels accepted by the first accepting module 117a to the setting target accepted by the second accepting module 117h. Furthermore, if the manual setting is selected, the setting module 117d sets the recording time accepted by the first accepting module 117a to the setting target accepted by the second accepting module 117h. By setting different channels to the recorder 11 and the loop recorder 106, for example, it is possible to increase the number of channels to be recorded simultaneously by the recorder 11 and the loop recorder 106. Furthermore, by setting the same channels to be recorded simultaneously to the recorder 11 and the loop recorder 106 and by setting different recording time in which the simultaneous recording is performed between the recorder 11 and the loop recorder 106, it is possible to increase time to record specific channels simultaneously by the recorder 11 and the loop recorder 106.

By contrast, if the automatic setting is selected, the setting module 117d sets a channel at a high bit rate among the channels accepted by the first accepting module 117a to first one of the recorder 11 and the loop recorder 106 that performs simultaneous recording on a recording medium having larger recording capacity based on the first recording capacity and the second recording capacity indicated by the capacity information acquired by the first acquiring module 117b. Furthermore, if the automatic setting is selected, the setting module 117d sets a channel at a low bit rate among the channels accepted by the first accepting module 117a to second one of the recorder 11 and the loop recorder 106 that performs simultaneous recording on a recording medium having smaller recording capacity based on the first recording capacity and the second recording capacity indicated by the capacity information acquired by the first acquiring module 117b.

Alternatively, if the automatic setting is selected, the setting module 117d sets more channels to the first one of the recorder 11 and the loop recorder 106 that performs simultaneous recording on a recording medium having larger recording capacity than to the second one of the recorder 11 and the loop recorder 106 based on the first recording capacity and the second recording capacity indicated by the capacity information acquired by the first acquiring module 117b. Furthermore, if the automatic setting is selected, the setting module 117d sets less channels to the second one of the recorder 11 and the loop recorder 106 that performs simultaneous recording on a recording medium having smaller recording capacity than to the first one of the recorder 11 and the loop recorder 106 based on the first recording capacity and the second recording capacity indicated by the capacity information acquired by the first acquiring module 117b. In particular, if the automatic setting is selected, and the total number of channels to be recorded simultaneously by the recorder 11 and the loop recorder 106 is an odd number, the setting module 117d sets more channels to the first one of the recorder 11 and the loop recorder 106 that performs simultaneous recording on a recording medium having larger recording capacity than to the second one of the recorder 11 and the loop recorder 106 based on the first recording capacity and the second recording capacity indicated by the capacity information thus acquired.

Furthermore, if the automatic setting is selected, the setting module 117d sets longer recording time to the first one of the recorder 11 and the loop recorder 106 that performs simultaneous recording on a recording medium having larger recording capacity than to the second one of the recorder 11 and the loop recorder 106 based on the first recording capacity and the second recording capacity indicated by the capacity information acquired by the first acquiring module 117b. If the first recording capacity and the second recording capacity indicated by the capacity information thus acquired are equal to each other, the setting module 117d sets the recording time thus accepted to the recorder 11 and the loop recorder 106 such that the recording time for the recorder 11 to perform simultaneous recording and the recording time for the loop recorder 106 to perform simultaneous recording are equal to each other. In other words, the recording time set to each of the devices changes depending on the recording capacity of the recording medium on which each on the devices performs simultaneous recording.

As a result, each channel to be recorded simultaneously among a plurality of channels is automatically set to either of the devices, whereby trouble of the user can be reduced when the user sets the setting information. Furthermore, each recording time for simultaneous recording among recording time to record the channels simultaneously is automatically set to either of the devices, whereby the user need not consider which device is used for performing simultaneous recording in each recording time.

The transmitter 117e is realized by the MFC module 15, and transmits the setting information set to the recorder 11 by the setting module 117d to the recorder 11. In the present embodiment, the transmitter 117e adds the setting information set to the recorder 11 by the setting module 117d to the setting information received by the receiver 117g, and transmits the setting information to the recorder 11. When receiving the setting information transmitted from the transmitter 117e, the recorder 11 reflects the setting information thus received in the setting information set to the recorder 11. In the present embodiment, the transmitter 117e adds the setting information set to the recorder 11 to the setting information received by the receiver 117g, and transmits the setting information. However, the method for transmitting the setting information is not limited thereto, and the transmitter 117e may transmit only the setting information set to the recorder 11.

The second acquiring module 117f is realized by the MFC module 15, and acquires the first program information indicating programs on channels to be recorded simultaneously by the recorder 11. Specifically, the second acquiring module 117f acquires the first program information indicating programs on channels to be recorded simultaneously by the recorder 11 from the recorder 11.

In the present embodiment, in addition to the first program information listed in a past program guide (program guide data) output to the display controller 115 by the EPG processor 112, the second acquiring module 117f acquires the first program information indicating programs on channels to be recorded simultaneously within predetermined time period before and after the first program information listed in the past program guide. The second acquiring module 117f then transmits the first program information thus acquired to the EPG processor 112, thereby issuing an instruction for display of the past program guide.

Processing for setting the setting information to the recorder 11 and the loop recorder 106 with a single device (the digital television 10 in the present embodiment) will now be described in detail. In the present embodiment, an explanation will be made of an example in which the setting information is set to the recorder 11 and the loop recorder 106 by the digital television 10. Alternatively, the setting information can be set to the recorder 11 and the loop recorder 106 by the recorder 11.

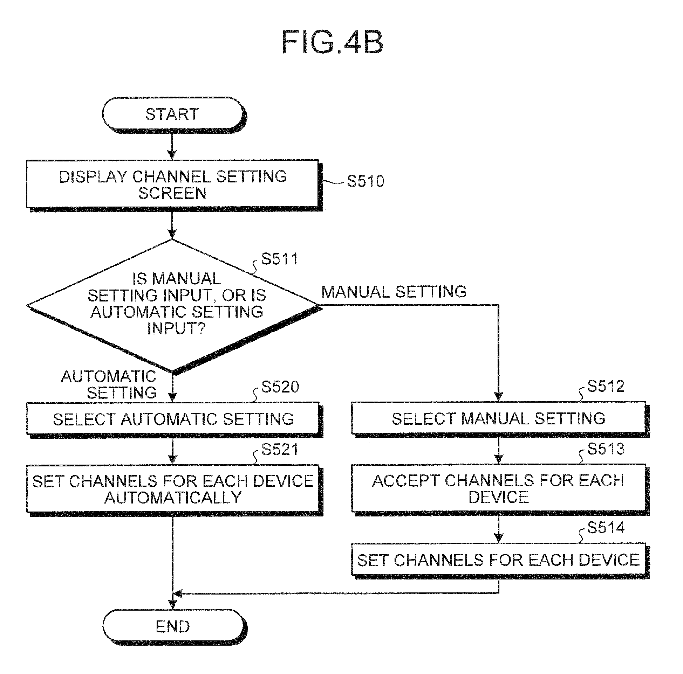

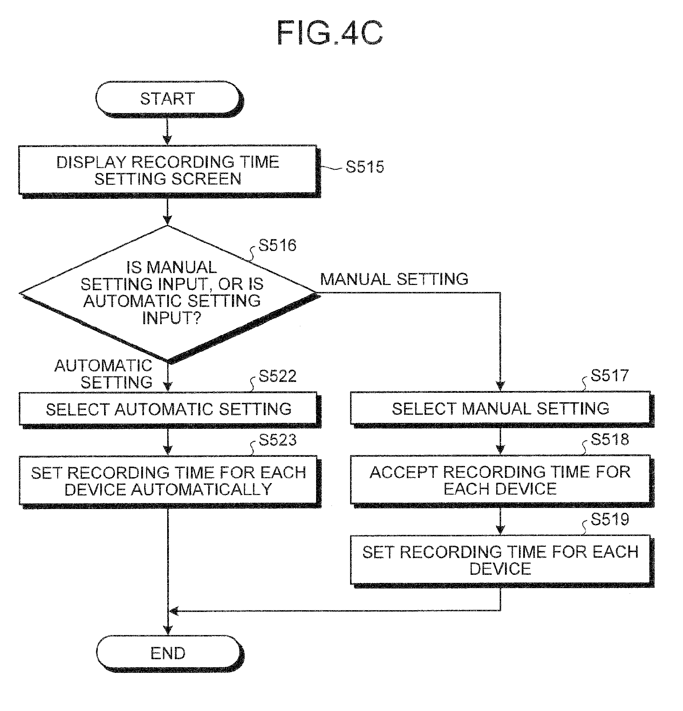

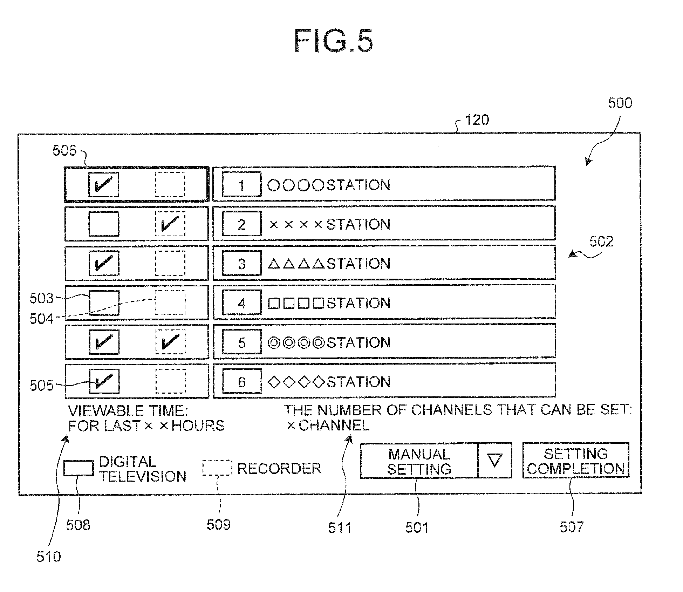

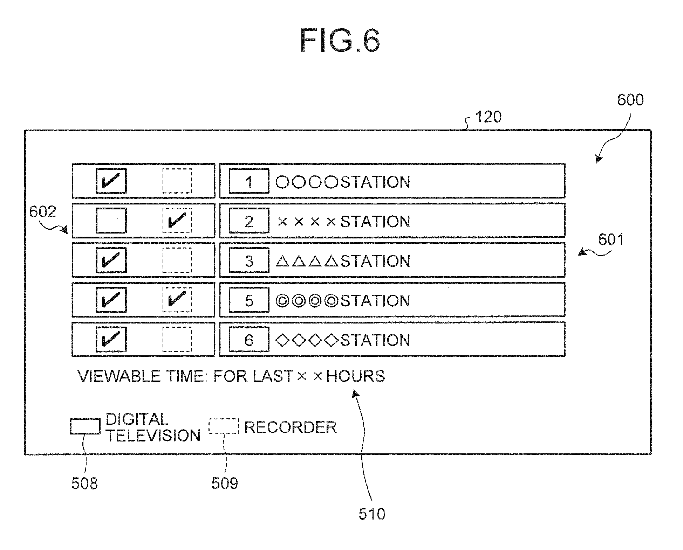

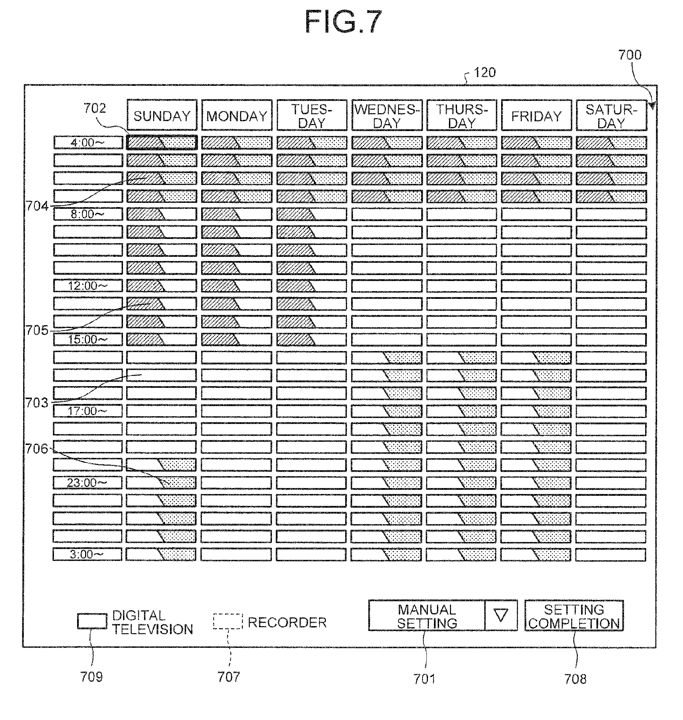

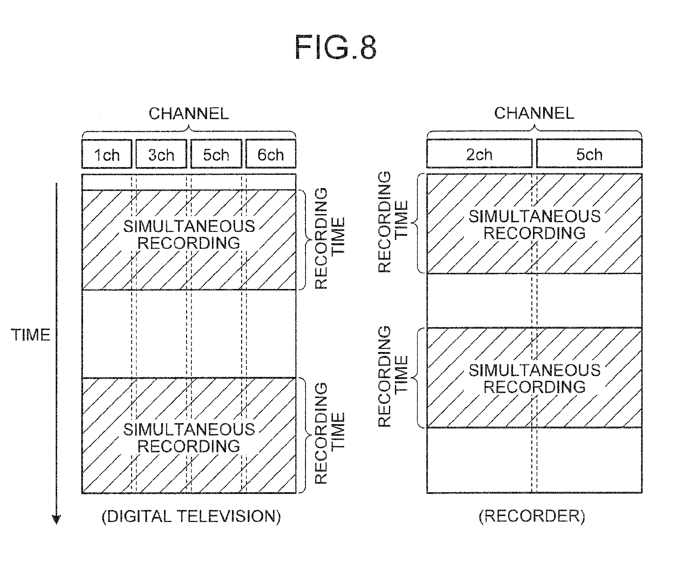

Setting of the setting information to the recorder 11 and the loop recorder 106 performed when the manual setting is selected will now be described with reference to FIG. 4B, FIG. 4C, and FIGS. 5 to 8. FIG. 4B is a flowchart illustrating a flow of processing for setting channels by the manual setting or the automatic setting in the embodiment. FIG. 4C is a flowchart illustrating a flow of processing for setting recording time by the manual setting or the automatic setting in the embodiment. FIG. 5 is a schematic diagram of an example of a channel setting screen when channels to be recorded simultaneously by the recorder and the loop recording module are set by the manual setting in the embodiment. FIG. 6 is a schematic diagram of an example of a channel confirmation screen when the channels to be recorded simultaneously by the recorder and the loop recording module are set by the manual setting in the embodiment. FIG. 7 is a schematic diagram of an example of a recording time setting screen when recording time in which simultaneous recording is performed by the recorder and the loop recording module is set by the manual setting in the embodiment. FIG. 8 is a schematic diagram for explaining an example of simultaneous recording in each of the devices in accordance with setting information set by the manual setting in the embodiment.

An explanation will be made of the case where channels to be recorded simultaneously by the recorder 11 and the loop recorder 106 are set by the manual setting.

The receiver 117g requests acquisition of channels being set to the recorder 11 as the setting information from the recorder 11, and receives the channels being set to the recorder 11. The display controller 115 then displays, on the display 120, a channel setting screen 500 (refer to FIG. 5) that is a screen for setting channels and on which the channels received from the recorder 11 and channels set to the loop recorder 106 by the setting module 117d as the setting information are displayed. If channels to be recorded simultaneously by the recorder 11 and the loop recorder 106 are set by using the channel setting screen 500, the transmitter 117e transmits the channels thus set to the recorder 11 as the setting information.

Specifically, if the user operates the remote controller 130 to request display of the channel setting screen 500, the display controller 115 displays the channel setting screen 500 on the display 120 at S510 in FIG. 4B. If a cursor 506 is placed to a setting method input box 501 for inputting a setting method on the channel setting screen 500, and the manual setting is input at S511 in FIG. 4B, the selector 117c selects the manual setting as the setting method for channels at S512 in FIG. 4B.

Subsequently, the display controller 115 displays a list 502 of channels to be recorded simultaneously by the recorder 11 and the loop recorder 106 and check boxes 503 and 504 for inputting channels to be recorded simultaneously among the channels included in the list 502 and devices (the digital television 10 and the recorder 11) that record the channels simultaneously on the channel setting screen 500. The user operates the remote controller 130 to place the cursor 506 to the check boxes 503 and 504 of the channels to be recorded simultaneously, and presses a color button (not illustrated) provided to the remote controller 130. With this operation, the user puts check marks 505 in the check boxes 503 and 504, thereby inputting the channels to be recorded simultaneously.

On the channel setting screen 500, for example, the following items are displayed: color button display 508 and 509 each indicating a color button for inputting a setting target (the digital television 10 or the recorder 11) of channels to be recorded simultaneously among color buttons provided to the remote controller 130; viewable recording time 510 that is time required for viewing programs available for viewing (that is, programs recorded simultaneously) in the digital television 10 and the recorder 11; the number of channels 511 that can be set as channels to be recorded simultaneously (that is, the number of tuners provided to the digital television 10 and the recorder 11); and a setting completion button 507 for inputting setting completion of channels.

To input five channels among the channels included in the list 502 as channels to be recorded simultaneously by both the digital television 10 and the recorder 11, the user operates the remote controller 130 to place the cursor 506 to the check boxes 503 and 504 of the five channels to be recorded simultaneously, and presses a determination button (not illustrated) of the remote controller 130. As a result, the display controller 115 puts check marks 505 in the check boxes 503 and 504 of the five channels. Thus, the five channels are input as the channels to be recorded simultaneously by both the digital television 10 and the recorder 11.

To input channels 1, 3, and 6 among the channels included in the list 502 as channels to be recorded simultaneously by one of the devices (e.g., the digital television 10), the user operates the remote controller 130 to place the cursor 506 to the check boxes 503 and 504 of channels 1, 3, and 6 to be recorded simultaneously. Subsequently, the user presses a blue color button (not illustrated) corresponding to the color button display 508 (blue) for inputting the fact that a channel is to be recorded simultaneously by the digital television 10 among the color buttons (not illustrated) of the remote controller 130. As a result, the display controller 115 puts check marks 505 in the check boxes 503 of channels 1, 3, and 6. Thus, channels 1, 3, and 6 are input as the channels to be recorded simultaneously by the digital television 10.

By contrast, to input two channels among the channels included in the list 502 as channels to be recorded simultaneously by the other of the devices (e.g., the recorder 11), the user operates the remote controller 130 to place the cursor 506 to the check boxes 503 and 504 of the two channels to be recorded simultaneously. Subsequently, the user presses a red color button (not illustrated) corresponding to the color button display 508 (red) for inputting the fact that a channel is to be recorded simultaneously by the recorder 11 among the color buttons (not illustrated) of the remote controller 130. As a result, the display controller 115 puts check marks 505 in the check boxes 504 of the two channels. Thus, the two channels are input as the channels to be recorded simultaneously by the recorder 11.

If putting the check marks 505 in the check boxes 503 and 504 of the channels to be recorded simultaneously is completed, the cursor 506 is placed to the setting completion button 507, and the determination button (not illustrated) of the remote controller 130 is pressed, the display controller 115 displays a channel confirmation screen 600 (refer to FIG. 6) on the display 120. The channel confirmation screen 600 is a screen for confirming channels to be recorded simultaneously and devices that record programs on the channels simultaneously. On the channel confirmation screen 600, the following items are displayed: a list 601 of the channels for which check marks 505 are put in the check boxes 503 and 504 on the channel setting screen 500; and input result 602 of the check marks 505 to the check boxes 503 and 504 of the channels included in the list 601.

Because no check mark 505 is put in the check box 503 or 504 of channel 4 among the channels included in the list 502 on the channel setting screen 500, the list 601 does not include channel 4 on the channel confirmation screen 600. If the determination button (not illustrated) of the remote controller 130 is pressed while the channel confirmation screen 600 is being displayed on the display 120, the first accepting module 117a and the second accepting module 117h accept the channels for each of the devices input on the channel setting screen 500 at S513 in FIG. 4B. Specifically, the first accepting module 117a and the second accepting module 117h accept channels 1, 3, 5, and 6 as the channels to be recorded simultaneously by the loop recorder 106 (digital television 10), and accept channels 2 and 5 as the channels to be recorded simultaneously by the recorder 11.

At S514 in FIG. 4B, the setting module 117d sets the channels for each of the devices thus accepted. If a back button (not illustrated) of the remote controller 130 is pressed while the channel confirmation screen 600 is being displayed, the display controller 115 displays the channel setting screen 500 on the display 120 again. Thus, the user can input channels to be recorded simultaneously and devices that record the channels simultaneously again.

An explanation will be made of the case where recording time in which simultaneous recording is performed by the recorder 11 and the loop recording module 106 is set by the manual setting.

The receiver 117g requests acquisition of recording time being set to the recorder 11 as the setting information from the recorder 11, and receives the recording time being set to the recorder 11. The display controller 115 then displays, on the display 120, a recording time setting screen 700 (refer to FIG. 7) that is a screen for setting recording time and on which the recording time received from the recorder 11 and recording time set to the loop recorder 106 by the setting module 117d as the setting information are displayed. If recording time in which simultaneous recording is performed by the recorder 11 and the loop recorder 106 is set by using the recording time setting screen 700, the transmitter 117e transmits the recording time thus set to the recorder 11 as the setting information.

Specifically, if the user operates the remote controller 130 to request display of the recording time setting screen 700, the display controller 115 displays the recording time setting screen 700 on the display 120 at S515 in FIG. 4C. If a cursor 702 on the recording time setting screen 700 is placed to a setting method input box 701 for inputting a setting method, and the manual setting is input at S516 in FIG. 4C, the selector 117c selects the manual setting as the setting method for recording time at S517 in FIG. 4C.

Subsequently, the display controller 115 displays the recording time setting screen 700 on which recording time cells 703 indicating recording time in which simultaneous recording is performed by the recorder 11 and the loop recorder 106 are arranged for each day of the week (or each day) . The user operates the remote controller 130 to place the cursor 702 to the recording time cell 703 indicating recording time to perform simultaneous recording, and presses the determination button (not illustrated) or a color button (not illustrated) provided to the remote controller 130. With this operation, the user can input the recording time indicated by the recording time cell 703 to which the cursor 702 is placed as the recording time to perform simultaneous recording.

Similarly to the channel setting screen 500, color button display 709 and 707 each indicating a color button for inputting a device that performs simultaneous recording among the color buttons provided to the remote controller 130 are displayed on the recording time setting screen 700, for example.

To input recording time from 4 a.m. to 5 a.m. on Sunday as recording time in which simultaneous recording is performed by both the digital television 10 and the recorder 11, for example, the user operates the remote controller 130 to place the cursor 702 to the recording time cell 703 indicating time from 4 a.m. to 5 a.m. on Sunday, and presses the determination button (not illustrated) of the remote controller 130. As a result, the display controller 115 changes the color of the recording time cell 703 indicating the time from 4 a.m. to 5 a.m. on Sunday to colors (e.g., blue and red) corresponding to the digital television 10 and the recorder 11 (represented by a reference numeral 704). Thus, the time from 4 a.m. to 5 a.m. on Sunday is input as the recording time in which simultaneous recording is performed by both the loop recorder 106 and the recorder 11.

To input recording time from 8 a.m. to 9 a.m. on Sunday as recording time in which simultaneous recording is performed by the digital television 10, the user operates the remote controller 130 to place the cursor 702 to the recording time cell 703 indicating time from 8 a.m. to 9 a.m. on Sunday, and presses a color button (not illustrated) of the remote controller 130. As a result, the display controller 115 changes the color of the recording time cell 703 indicating the time from 8 a.m. to 9 a.m. on Sunday to a color (e.g., blue) corresponding to the digital television 10 (represented by a reference numeral 705). Thus, the time from 8 a.m. to 9 a.m. on Sunday is input as the recording time in which simultaneous recording is performed by the loop recorder 106.

By contrast, to input recording time from 23 p.m. to 24 p.m. on Sunday as recording time in which simultaneous recording is performed by the recorder 11, the user operates the remote controller 130 to place the cursor 702 to the recording time cell 703 indicating time from 23 p.m. to 24 p.m. on Sunday, and presses a color button (not illustrated) of the remote controller 130. As a result, the display controller 115 changes the color of the recording time cell 703 indicating the time from 23 p.m. to 24 p.m. on Sunday to a color (e.g., red) corresponding to the recorder 11 (represented by a reference numeral 706) . Thus, the time from 23 p.m. to 24 p.m. on Sunday is input as the recording time in which simultaneous recording is performed by the recorder 11.

If input of the recording time to perform simultaneous recording is completed, the cursor 702 is placed to a setting completion button 708, and the determination button (not illustrated) of the remote controller 130 is pressed, the first accepting module 117a and the second accepting module 117h accept the recording time for each of the devices input on the recording time setting screen 700 at S518 in FIG. 4C. Subsequently, at S519 in FIG. 4C, the setting module 117d sets the recording time for each of the devices thus accepted.

If the channels and the recording time are set by the manual setting, the recorder 11 and the loop recorder 106 performs simultaneous recording of the channels (channels 2 and 5) for the recorder 11 and the channels (channels 1, 3, 5, and 6) for the loop recorder 106 input on the channel setting screen 500 in the recording time set for the recorder 11 and the loop recorder 106 on the recording time setting screen 700, respectively. Therefore, as illustrated in FIG. 8, the channels to be recorded simultaneously by each of the recorder 11 and the loop recorder 106 and the recording time thereof are different between the recorder 11 and the loop recorder 106.

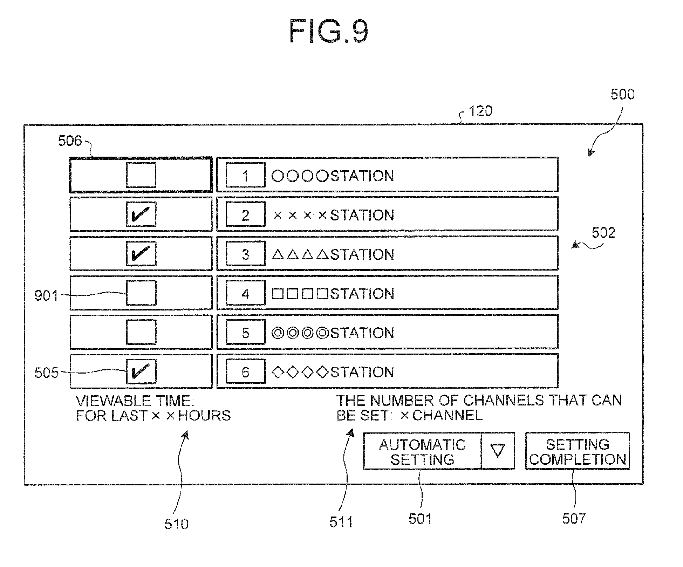

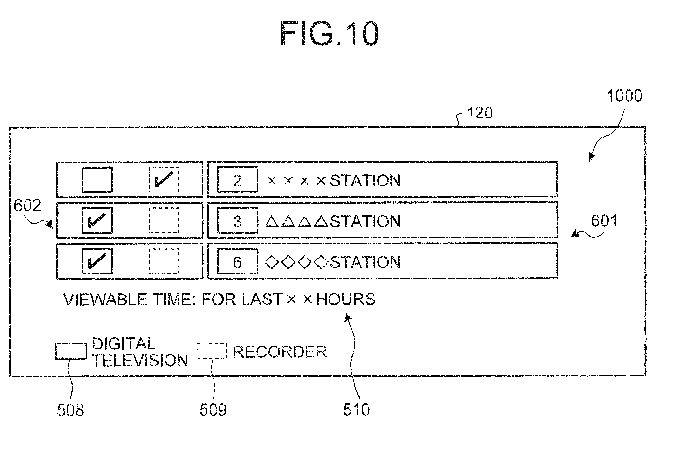

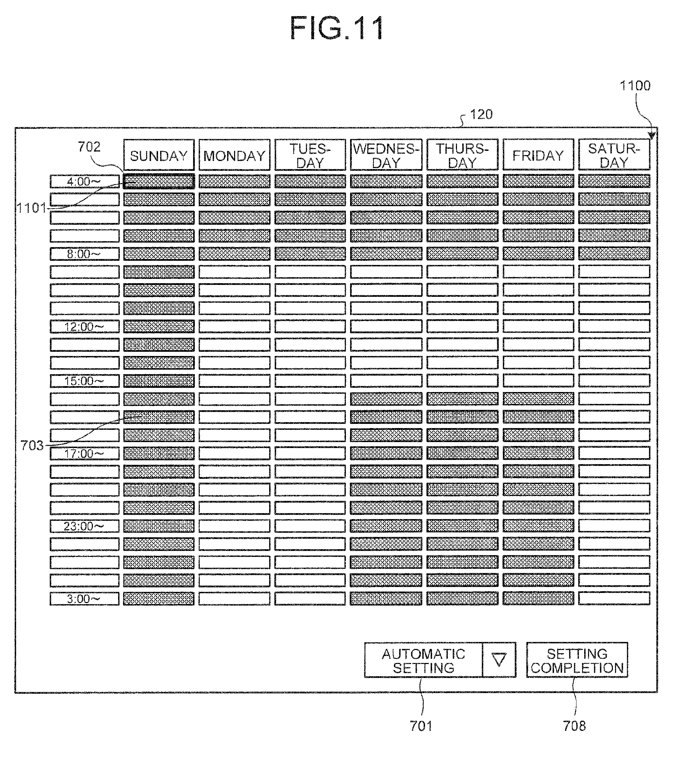

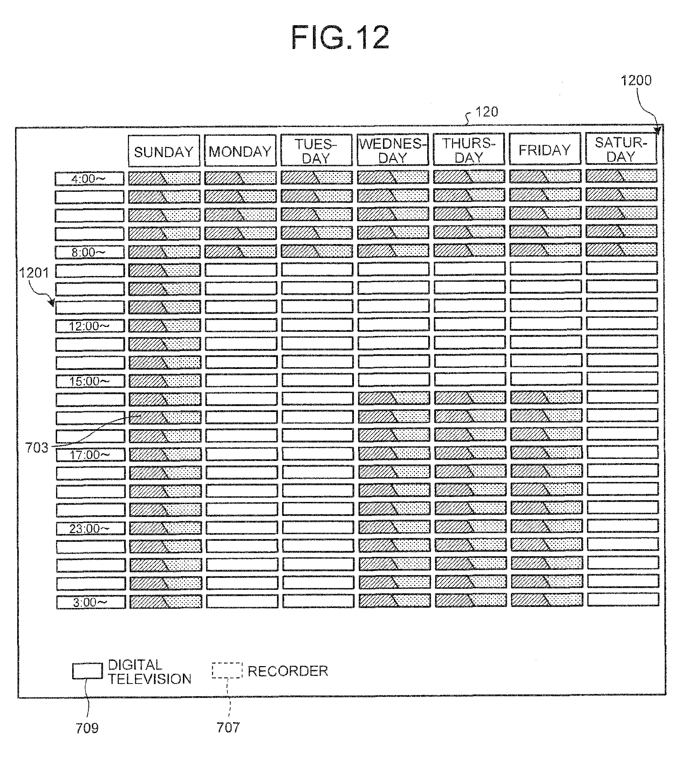

Setting of the setting information to the recorder 11 and the loop recorder 106 performed when the automatic setting is selected will now be described with reference to FIG. 4B, FIG. 4C, and FIGS. 9 to 12. FIG. 9 is a schematic diagram of an example of the channel setting screen when channels to be recorded simultaneously are set by the automatic setting in the embodiment. FIG. 10 is a schematic diagram of an example of the channel confirmation screen when the channels to be recorded simultaneously are set by the automatic setting in the embodiment. FIG. 11 is a schematic diagram of an example of the recording time setting screen when recording time to perform simultaneous recording is set by the automatic setting in the embodiment. FIG. 12 is a schematic diagram of an example of a recording time confirmation screen when the recording time to perform simultaneous recording is set by the automatic setting in the embodiment.

An explanation will be made of the case where channels to be recorded simultaneously by the recorder 11 and the loop recorder 106 are set by the automatic setting.

To set channels to be recorded simultaneously by the recorder 11 and the loop recorder 106 by using the digital television 10, the receiver 117g requests acquisition of channels being set to the recorder 11 as the setting information from the recorder 11, and receives the channels being set to the recorder 11. The display controller 115 then displays, on the display 120, the channel setting screen 500 (refer to FIG. 9) that is a screen for setting channels and on which the channels received from the recorder 11 and channels set to the loop recorder 106 by the setting module 117d as the setting information are displayed. If channels to be recorded simultaneously by the recorder 11 and the loop recorder 106 are set by using the channel setting screen 500, the transmitter 117e transmits the channels thus set to the recorder 11.

Specifically, if the user operates the remote controller 130 to request display of the channel setting screen 500, the display controller 115 displays the channel setting screen 500 on the display 120 at S510 in FIG. 4B. If the cursor 506 on the channel setting screen 500 is placed to the setting method input box 501 for inputting a setting method, and the automatic setting is input at S511 in FIG. 4B, the selector 117c selects the automatic setting as the setting method for channels at S520 in FIG. 4B.

Subsequently, the display controller 115 displays the list 502 of channels to be recorded simultaneously by the recorder 11 and the loop recorder 106 and a check box 901 for inputting channels to be recorded simultaneously among the channels included in the list 502 on the channel setting screen 500. If the automatic setting is selected as the setting method for the setting information, the setting module 117d automatically determines which device is used for simultaneous recording of each channel to be recorded simultaneously. Therefore, no check box for inputting a device that performs simultaneous recording is displayed on the channel setting screen 500. The user operates the remote controller 130 to place the cursor 506 to the check boxes 901 of the channels to be recorded simultaneously, and presses the determination button (not illustrated) of the remote controller 130. With this operation, the user puts check marks 505 in the check boxes 901, thereby inputting the channels to be recorded simultaneously. The number of channels for which check marks 505 can be put in their check boxes 901 is the total number of tuners provided to the recorder 11 and the digital television 10. If two devices each comprising six tuners are connected, for example, check marks can be put in the check boxes 901 of 12 channels. In other words, 12 channels can be input as the channels to be recorded simultaneously.

If putting the check marks 505 in the check boxes 901 of the channels to be recorded simultaneously is completed, the cursor 506 is placed to the setting completion button 507, and the determination button (not illustrated) of the remote controller 130 is pressed, the display controller 115 displays a channel confirmation screen 1000 on the display 120. The channel confirmation screen 1000 is a screen for confirming channels to be recorded simultaneously and devices that record programs on the channels simultaneously. On the channel confirmation screen 1000, the following items are displayed: the list 601 of the channels for which check marks 505 are put in the check boxes 901 on a channel setting screen 900; and the input result 602 of the check marks 505 to the check boxes 901 of the channels included in the list 601.

On the channel setting screen 900, check marks 505 are put in the check boxes 901 of channels 2, 3, and 6 alone, and no check mark 505 is put in the check box 901 of channel 1, 4, or 5 among the channels included in the list 502. Therefore, the list 601 does not include channels 1, 4, or 5. The setting module 117d automatically determines either the recorder 11 or the loop recorder 106 is used for simultaneous recording of each channel included in the list 601 at S521 in FIG. 4B.

Specifically, if the second recording capacity (recording capacity of the loop recording area 110A) indicated by the capacity information acquired by the first acquiring module 117b is larger than the first recording capacity at S520 in FIG. 4B, the setting module 117d sets two channels (channels 3 and 6) among channels 2, 3, and 6 to be recorded simultaneously as channels to be recorded simultaneously by the loop recorder 106. By contrast, the setting module 117d sets one channel (channel 2) as a channel to be recorded simultaneously by the recorder 11. If the back button (not illustrated) of the remote controller 130 is pressed while the channel confirmation screen 1000 is being displayed, the display controller 115 displays the channel setting screen 900 on the display 120 again. Thus, the user can input channels to be recorded simultaneously again.

An explanation will be made of the case where recording time in which simultaneous recording is performed by the recorder 11 and the loop recorder 106 is set by the automatic setting.

To set recording time in which simultaneous recording is performed by the recorder 11 and the loop recorder 106 by using the digital television 10, the receiver 117g requests acquisition of recording time being set to the recorder 11 as the setting information from the recorder 11, and receives the recording time being set to the recorder 11. The display controller 115 then displays, on the display 120, a recording time setting screen 1100 (refer to FIG. 11) that is a screen for setting recording time and on which the recording time received from the recorder 11 and recording time set to the loop recorder 106 by the setting module 117d as the setting information are displayed. If recording time in which simultaneous recording is performed by the recorder 11 and the loop recorder 106 is set by using the recording time setting screen 1100, the transmitter 117e transmits the recording time thus set to the recorder 11 as the setting information.

Specifically, if the user operates the remote controller 130 to request display of the recording time setting screen 1100, the display controller 115 displays the recording time setting screen 1100 on the display 120 at S515 in FIG. 4C. If the cursor 702 is placed to the setting method input box 701 for inputting a setting method on the recording time setting screen 1100, and the automatic setting is input at S516 in FIG. 4C, the selector 117c selects the automatic setting as the setting method for recording time at S522 in FIG. 4C.

Subsequently, the display controller 115 displays the recording time setting screen 1100 on which the recording time cells 703 indicating recording time in which simultaneous recording is performed by the recorder 11 and the loop recorder 106 are arranged for each day of the week (or each day). The user operates the remote controller 130 to place the cursor 702 to the recording time cell 703 indicating recording time in which simultaneous recording is performed, and presses the determination button (not illustrated) provided to the remote controller 130. With this operation, the user can input the recording time indicated by the recording time cell 703 to which the cursor 702 is placed as the recording time to perform simultaneous recording.

To input recording time from 4 a.m. to 5 a.m. on Sunday as recording time to perform simultaneous recording, for example, the user operates the remote controller 130 to place the cursor 702 to the recording time cell 703 indicating time from 4 a.m. to 5 a.m. on Sunday, and presses the determination button (not illustrated) of the remote controller 130. As a result, the display controller 115 changes the color of the recording time cell 703 indicating the time from 4 a.m. to 5 a.m. on Sunday to a different color (represented by a reference numeral 1101) from that for the recording time cell 703 not being input as the recording time. Thus, the time from 4 a.m. to 5 a.m. on Sunday is input as the recording time to perform simultaneous recording.

If input of the recording time to perform simultaneous recording is completed, the cursor 702 is placed to the setting completion button 708, and the determination button (not illustrated) of the remote controller 130 is pressed, the display controller 115 displays a recording time confirmation screen 1200 for confirming recording time to perform simultaneous recording on the display 120 (refer to FIG. 12). Input result 1201 of the recording time input on the recording time setting screen 1100 is displayed on the recording time confirmation screen 1200. In the present embodiment, the input result 1201 of the recording time input on the recording time setting screen 1100 is displayed on the recording time confirmation screen 1200 by changing the color of the recording time cell 703 indicating the recording time thus input to colors (e.g., blue and red) corresponding to the digital television 10 and the recorder 11. If the determination button (not illustrated) of the remote controller 130 is pressed while the recording time confirmation screen 1200 is being displayed, the setting module 117d sets the recording time input on the recording time setting screen 1100 as the recording time in which simultaneous recording is performed by both the recorder 11 and the loop recorder 106 at S523 in FIG. 4C.

In the present embodiment, if the recording time is set by the automatic setting, the recording time input on the recording time setting screen 1100 is set as the recording time in which simultaneous recording is performed by both the recorder 11 and the loop recorder 106. However, the method for setting the recording time is not limited thereto. Alternatively, the recording time in which simultaneous recording is performed by the recorder 11 and the loop recorder 106 may be set such that at least one of the recorder 11 and the loop recorder 106 performs simultaneous recording for each recording time input on the recording time setting screen 1100.

If the channels and the recording time are set by the automatic setting, the recorder 11 and the loop recorder 106 simultaneously record the channel (channel 2) for the recorder 11 and the channels (channels 3 and 6) for the loop recorder 106, respectively, set based on the first recording capacity and the second recording capacity indicated by the capacity information acquired by the first acquiring module 117b in the recording time input on the recording time setting screen 1100. Therefore, the channels to be recorded simultaneously by the recorder 11 are different from those to be recorded simultaneously by the loop recorder 106. By contrast, the recording time in which simultaneous recording is performed by the recorder 11 coincides with the recording time in which simultaneous recording is performed by the loop recorder 106.

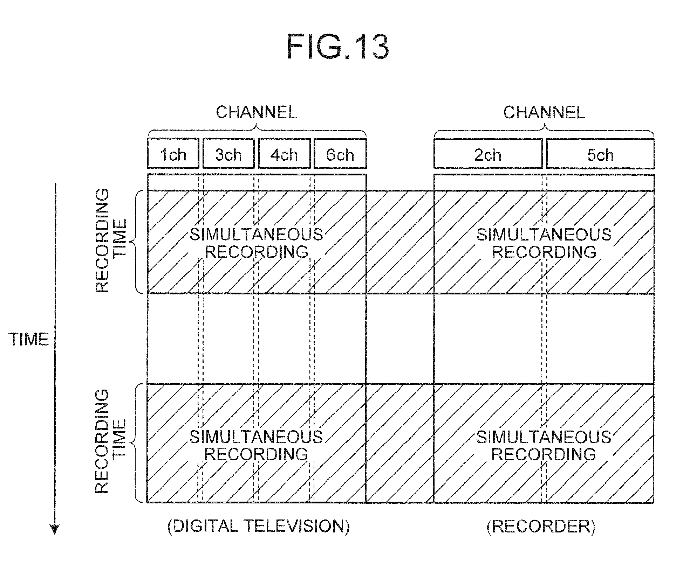

An explanation will be made of an example of simultaneous recording performed by the recorder 11 and the loop recorder 106 if channels to be recorded simultaneously by each of the recorder 11 and the loop recorder 106 are set by the manual setting and the recording time in which simultaneous recording is performed by each of the recorder 11 and the loop recorder 106 is set by the automatic setting with reference to FIG. 13. FIG. 13 is a schematic diagram for explaining an example of simultaneous recording performed by each of the devices based on the channels set by the manual setting and the recording time set by the automatic setting in the embodiment. The method for setting the channels to be recorded simultaneously by each of the recorder 11 and the loop recorder 106 by using the manual setting and the method for setting the recording time in which simultaneous recording is performed by each of the recorder 11 and the loop recorder 106 by using the automatic setting are the same as the methods described above. For this reason, the explanation thereof will be omitted.

If the channels are set by the manual setting and the recording time is set by the automatic setting, the recorder 11 and the loop recorder 106 simultaneously record the channels (channel 2 and 5) for the recorder 11 and the channels (channels 1, 3, 4 and 6) for the loop recorder 106, respectively, input on the channel setting screen 500 in the recording time input on the recording time setting screen 1100. Therefore, the channels to be recorded simultaneously by the recorder 11 are different from those to be recorded simultaneously by the loop recorder 106. By contrast, the recording time in which simultaneous recording is performed by the recorder 11 coincides with the recording time in which simultaneous recording is performed by the loop recorder 106.

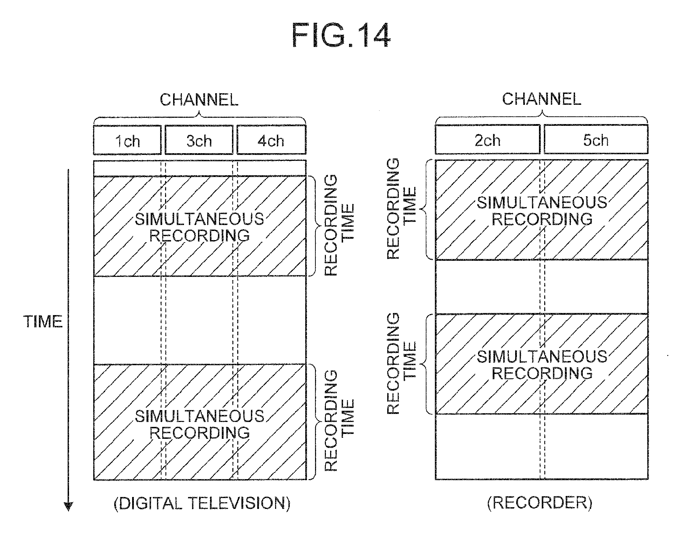

An explanation will be made of an example of simultaneous recording performed by the recorder 11 and the loop recorder 106 if channels to be recorded simultaneously by each of the recorder 11 and the loop recorder 106 are set by the automatic setting and the recording time in which simultaneous recording is performed by each of the recorder 11 and the loop recorder 106 is set by the manual setting with reference to FIG. 14. FIG. 14 is a schematic diagram for explaining an example of simultaneous recording performed by each of the devices based on the channels set by the automatic setting and the recording time set by the manual setting in the embodiment. The method for setting the channels to be recorded simultaneously by each of the recorder 11 and the loop recorder 106 by using the automatic setting and the method for setting the recording time in which simultaneous recording is performed by each of the recorder 11 and the loop recorder 106 by using the manual setting are the same as the methods described above. For this reason, the explanation thereof will be omitted.

If the channels are set by the automatic setting and the recording time is set by the manual setting, the recorder 11 and the loop recorder 106 simultaneously record the channels (channels 2 and 5) for the recorder 11 and the channels (channels 1, 3, and 4) for the loop recorder 106, respectively, set based on the first recording capacity and the second recording capacity indicated by the capacity information acquired by the first acquiring module 117b in the recording time each input for the recorder 11 and the loop recorder 106 on the recording time setting screen 700. Therefore, as illustrated in FIG. 14, the channels to be recorded simultaneously by the recorder 11 are different from those to be recorded simultaneously by the loop recorder 106. Furthermore, as illustrated in FIG. 14, the recording time in which simultaneous recording is performed by the recorder 11 is different from the recording time in which simultaneous recording is performed by the loop recorder 106.

If the channels to be recorded simultaneously by each of the recorder 11 and the loop recorder 106 are set by the automatic setting, the setting module 117d sets the channels to be recorded simultaneously by each of the recorder 11 and the loop recorder 106 based on the first recording capacity and the second recording capacity indicated by the capacity information acquired by the first acquiring module 117b as described above. If the first recording capacity and the second recording capacity indicated by the capacity information are different, for example, the setting module 117d sets a channel at a high bit rate to first one of the recorder 11 and the loop recorder 106 that performs simultaneous recording on a recording medium having larger recording capacity. By contrast, the setting module 117d sets a channel at a low bit rate to second one of the recorder 11 and the loop recorder 106 that performs simultaneous recording on a recording medium having smaller recording capacity. Furthermore, if the first recording capacity and the second recording capacity indicated by the capacity information are different, and the number of channels input on the channel setting screen 900 is an odd number, the setting module 117d sets more channels to the first one of the recorder 11 and the loop recorder 106 that performs simultaneous recording on a recording medium having larger recording capacity than to the second one of the recorder 11 and the loop recorder 106, and sets less channels to the second one that performs simultaneous recording on a recording medium having smaller recording capacity than to the first one.

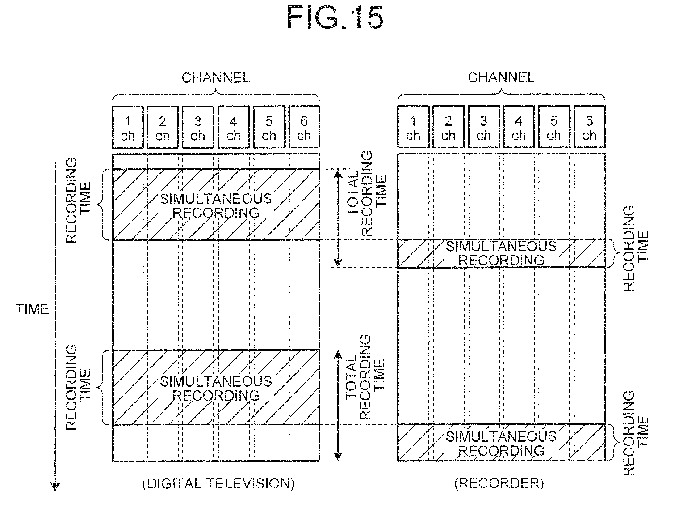

An explanation will be made of another example of simultaneous recording performed by the recorder 11 and the loop recorder 106 if channels to be recorded simultaneously by each of the recorder 11 and the loop recorder 106 and recording time thereof are set by the automatic setting with reference to FIG. 15. FIG. 15 is a schematic diagram for explaining another example of simultaneous recording performed by each of the devices based on the channels and the recording time set by the automatic setting in the embodiment.

In the example explained with reference to FIGS. 9 to 12, if the channels to be recorded simultaneously by each of the recorder 11 and the loop recorder 106 and the recording time thereof are set by the automatic setting, the setting module 117d performs setting as follows: the channels to be recorded simultaneously by the recorder 11 are different from those to be recorded simultaneously by the loop recorder 106; and the recording time in which simultaneous recording is performed by the recorder 11 coincides with the recording time in which simultaneous recording is performed by the loop recorder 106. However, the method for performing the setting is not limited thereto. Alternatively, the setting module 117d may perform setting such that the channels to be recorded simultaneously by the recorder 11 are the same as those to be recorded simultaneously by the loop recorder 106 and that the recording time in which simultaneous recording is performed by the recorder 11 does not coincide with the recording time in which simultaneous recording is performed by the loop recorder 106. If the first recording capacity and the second recording capacity indicated by the capacity information are different, for example, the setting module 117d may perform setting as follows: the channels to be recorded simultaneously by the recorder 11 are the same as those to be recorded simultaneously by the loop recorder 106; and longer recording time is set to first one of the recorder 11 and the loop recorder 106 that performs simultaneous recording on a recording medium having larger recording capacity, and shorter recording time is set to the second one of the recorder 11 and the loop recorder 106 that performs simultaneous recording on a recording medium having smaller recording capacity.

In this case, the recorder 11 and the loop recorder 106 simultaneously records channels (channels 1 to 6) for the recorder 11 and channels (channels 1 to 6) for the loop recorder 106 set on the channel setting screen 500, respectively, in different recording time. Therefore, as illustrated in FIG. 15, it is possible to increase the total recording time in which predetermined channels (e.g., channels 1 to 6) can be recorded simultaneously by the recorder 11 and the loop recorder 106 compared with the case where the channels to be recorded simultaneously by the recorder 11 are different from those to be recorded simultaneously by the loop recorder 106.

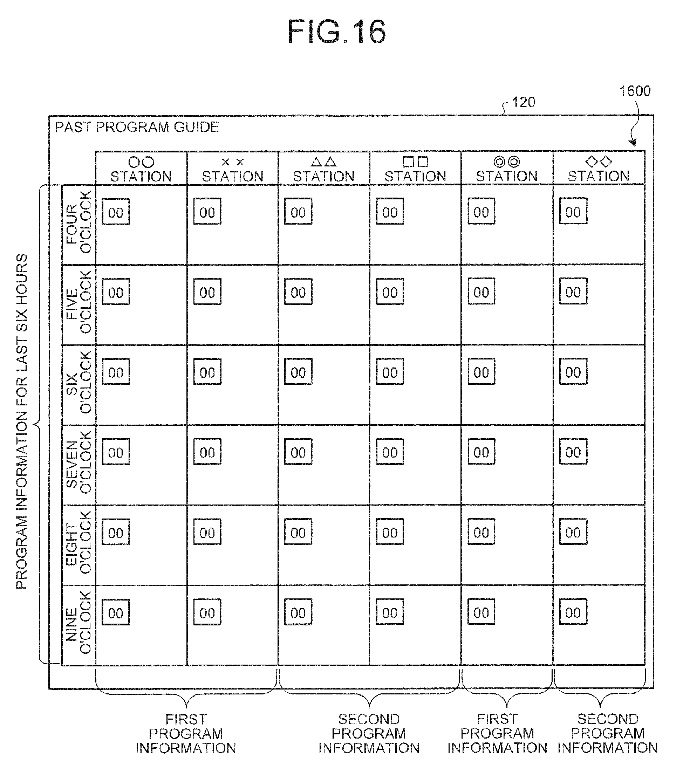

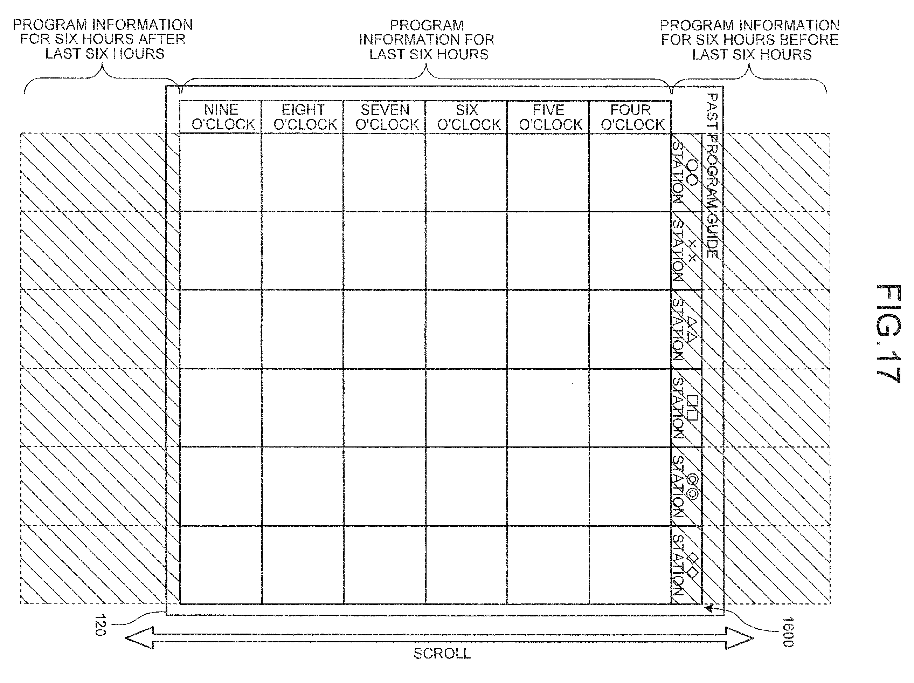

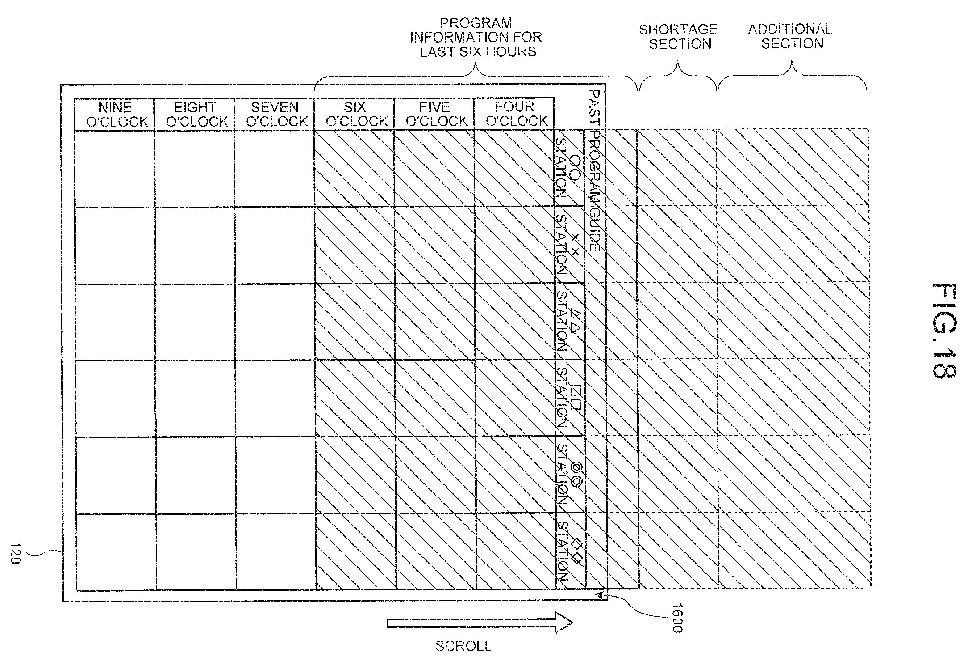

Processing for displaying a program guide (past program guide) of programs recorded simultaneously by the recorder 11 and the loop recorder 106 will now be described in detail with reference to FIGS. 16 to 18. FIG. 16 is a schematic diagram of an example of a past program guide in which program information of the programs recorded simultaneously by the recorder and the loop recording module is listed in the embodiment. FIG. 17 is a schematic diagram for explaining processing for acquiring the program information of the programs recorded simultaneously by the recorder and the loop recording module in the embodiment. FIG. 18 is a schematic diagram for explaining processing for scrolling the past program guide in which the program information of the programs recorded simultaneously by the recorder and the loop recording module is listed in the embodiment.

If the remote controller 130 is operated, and display of the past program guide is requested, the second acquiring module 117f requests acquisition of first program information of the programs on the channels recorded simultaneously by the recorder 11 from the recorder 11. When display of the past program guide is requested, it is assumed that the second acquiring module 117f has already acquired the first program information for a predetermined time period to be included in the past program guide displayed on the display 120 first (e.g., the first program information of the programs on the channels recorded simultaneously in last six hours among the programs on the channels recorded simultaneously by the recorder 11) from the recorder 11 in advance. In other words, the second acquiring module 117f performs communications with a device (e.g., the recorder 11) connected to the digital television 10 constantly, thereby acquiring the first program information of programs on channels recorded simultaneously by the device other than the digital television 10 for the predetermined time period.

Besides requesting acquisition of the first program information from the recorder 11, the second acquiring module 117f transmits the first program information acquired in advance to the EPG processor 112. The EPG processor 112 creates a past program guide in which the first program information acquired by the second acquiring module 117f and second program information for a predetermined time period (e.g., the first program information of programs on channels recorded simultaneously in last six hours among the first program information of programs on channels recorded simultaneously by the loop recorder 106) among second program information (that is, EPG information stored in the EPG memory 113) of the programs on the channels recorded simultaneously by the loop recorder 106 are listed for each channel in chronological order. The EPG processor 112 then transmits the past program guide to the display controller 115. The display controller 115 displays a past program guide 1600 received from the EPG processor 112 on the display 120.

At the same time when the past program guide 1600 is displayed or after the past program guide 1600 is displayed, the second acquiring module 117f acquires the first program information of programs on the channels recorded simultaneously by the recorder 11 within a predetermined time period (e.g., six hours) before and after the first program information listed in the past program guide 1600 from the recorder 11 as illustrated in FIG. 17. Conventionally, to confirm programs recorded simultaneously by separate devices, the user needs to start and operate each device and to confirm the programs in separate past program guides. According to the present embodiment, the user can display the past program guide with a single device seamlessly without considering which device stores therein each program indicated by the program information listed in the past program guide.

If display of the first program information for the predetermined time period listed in the past program guide 1600 illustrated in FIG. 17 is replaced by display of the first program information indicating programs on the channels recorded simultaneously before and after the predetermined time period (that is, the past program guide 1600 is scrolled to the past or the future), the first program information that is newly listed in the past program guide 1600 and that indicates programs on the channels recorded simultaneously by the recorder 11 within a predetermined time period (e.g., six hours) before and after the first program information for the predetermined time period has a shortage (refer to FIG. 18). In this case, the second acquiring module 117f newly requests acquisition of the first program information from the recorder 11. The second acquiring module 117f constantly acquires the first program information (additional section) of programs on the channels recorded simultaneously by the recorder 11 within the predetermined time period (e.g., six hours) before and after the first program information for the predetermined time period listed in the past program guide 1600 (refer to FIG. 18). In other words, the second acquiring module 117f acquires the first program information exceeding the predetermined time period (e.g., six hours) before and after the first program information for the predetermined time period listed in the past program guide 1600.

While the past program guide 1600 is being displayed on the display 120, if second date and time different from first date and time at which the programs indicated by the program information listed in the past program guide 1600 are recorded simultaneously is input, and display of a past program guide in which program information indicating programs recorded simultaneously at the second date and time is requested, the second acquiring module 117f requests acquisition of the first program information indicating the programs recorded simultaneously at the second date and time thus input from the recorder 11. The second acquiring module 117f then acquires the first program information indicating the programs on the channels recorded simultaneously at the second date and time thus input, and transmits the first program information thus acquired to the EPG processor 112. The EPG processor 112 creates a past program guide in which the first program information acquired by the second acquiring module 117f and the second program information indicating the programs recorded simultaneously at the second date and time thus input among the second program information indicating the programs recorded simultaneously by the loop recorder 106 are listed for each channel in chronological order. The EPG processor 112 then transmits the past program guide to the display controller 115. The display controller 115 displays the past program guide received from the EPG processor 112 on the display 120.

At the same time when the past program guide of the second date and time thus input is displayed or after the past program guide of the second date and time thus input is displayed, the second acquiring module 117f acquires the first program information of programs on the channels recorded simultaneously by the recorder 11 within the predetermined time period (e.g., six hours) before and after the first program information for the predetermined time period listed in the past program guide of the second date and time thus input from the recorder 11.

An explanation will be made of processing in which the first program information or the second program information is selected from the past program guide 1600 displayed on the display 120 to reproduce the programs indicated by the first program information or the second program information thus selected.

An example in which the digital television 10 and the recorder 11 are connected via the LAN 14 and the HDMI 13 as illustrated in FIG. 1 will now be described. If program information of a program to be reproduced is selected from the first program information and the second program information listed in the past program guide 1600 displayed on the display 120, and the program information thus selected is the second program information, the input switch 109 reads the program indicated by the second program information thus selected from the loop recording area 110A as the program to be input to the reproducer 108, and inputs the program to the reproducer 108.

By contrast, if program information of a program to be reproduced is selected from the first program information and the second program information listed in the past program guide 1600 displayed on the display 120, and the program information thus selected is the first program information, the input switch 109 reads the program indicated by the first program information thus selected from the recorder 11 via the HDMI 13, and inputs the program to the reproducer 108. This configuration makes it possible to facilitate reproduction of programs stored in other devices.

An example in which the digital television 10 and the recorder 11 are connected not via the HDMI 13 but via the LAN 14 will now be described. If program information of a program to be reproduced is selected from the first program information and the second program information listed in the past program guide 1600 displayed on the display 120, and the program information thus selected is the second program information, the reproducer 108 reads and reproduces the program indicated by the second program information thus selected from the loop recording area 110A. By contrast, if program information of a program to be reproduced is selected from the first program information and the second program information listed in the past program guide 1600 displayed on the display 120, and the program information thus selected is the first program information, the reproducer 108 reads and reproduces the program indicated by the first program information thus selected from the recorder 11 by DMS distribution using the LAN 14. At this time, the digital television 10 functions as a DMP and the recorder 11 functions as a DMS. With this configuration, switching of input to the reproducer 108, the DMS distribution, and the like are performed automatically. Therefore, the user can view the programs stored in other devices by a simple operation.

As described above, the digital television 10 according to the present embodiment is a recording device connected to the recorder 11 that records programs on a plurality of channels simultaneously on a first recording medium. The digital television 10 comprises: the loop recorder 106 that records programs on a plurality of channels simultaneously on a second recording medium; the first accepting module 117a that accepts setting information related to simultaneous recording performed by the recorder 11 and the loop recorder 106; the second accepting module 117h that accepts a setting target of the setting information thus accepted between the recorded 11 and the loop recorder 106; the first acquiring module 117b that acquires capacity information indicating first recording capacity of the recording medium on which the recorder 11 performs simultaneous recording; the selector 117c that selects a first setting method for setting the setting information thus accepted to the setting target thus accepted or a second setting method for setting the setting information thus accepted to the recorder 11 or the loop recorder 106 based on the first recording capacity indicated by the capacity information thus acquired and second recording capacity of the recording medium on which the loop recorder 106 performs simultaneous recording; the setting module 117d that sets the setting information thus accepted to the setting target thus accepted if the first setting method is selected, and sets the setting information thus accepted to the recorder 11 or the loop recorder 106 based on the first recording capacity and the second recording capacity if the second setting method is selected; and the transmitter 117e that transmits the setting information set to the recorder 11 to the recorder 11. The loop recorder 106 records the programs on the channels simultaneously on the recording medium in accordance with the setting information set to the loop recorder 106. With this configuration, the setting information can be set to the recorder 11 and the loop recorder 106 collectively by an arbitrary setting method. Therefore, the setting information can be set to the recorder 11 and the loop recorder 106 by a setting method desired by the user. Accordingly, it is possible to reduce trouble of the user when the user sets the setting information to the recorder 11 and the loop recorder 106.

While the computer program executed in the digital television 10 according to the present embodiment is provided in a manner incorporated in a read-only memory (ROM) or the like in advance, it is not limited thereto. Alternatively, the computer program executed in the digital television 10 according to the present embodiment may be provided in a manner recorded in a computer-readable recording medium, such as a compact disk read-only memory (CD-ROM), a flexible disk (FD), a compact disk recordable (CD-R), and a digital versatile disk (DVD), as a file in an installable or executable format.

The computer program executed in the digital television 10 according to the present embodiment may be provided in a manner stored in a computer connected to a network such as the Internet to be made available for downloads via the network. Furthermore, the computer program executed in the digital television 10 according to the present embodiment may be provided or distributed over a network such as the Internet.

The computer program executed in the digital television 10 according to the present embodiment has a module configuration comprising each module described above (the loop recorder 106, the reproducer 108, the input switch 109, the receiver 117g, the first accepting module 117a, the second accepting module 117h, the first acquiring module 117b, the selector 117c, the setting module 117d, the transmitter 117e, and the second acquiring module 117f). In actual hardware, the central processing unit (CPU, processor) reads and executes the computer program from the ROM described above to load each module on the main memory. Thus, the loop recorder 106, the reproducer 108, the input switch 109, the receiver 117g, the first accepting module 117a, the second accepting module 117h, the first acquiring module 117b, the selector 117c, the setting module 117d, the transmitter 117e, and the second acquiring module 117f are generated on the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A recording device (10) connected to a device (11) configured to record programs on a plurality of channels simultaneously on a recording medium, the recording device (10) comprising:
a recording controller (106) configured to record programs on a plurality of channels simultaneously on a recording medium (110);
a first accepting module (117a) configured to accept setting information related to simultaneous recording performed by the device (11) and the recording controller (106);
a second accepting module (117h) configured to accept a setting target of the accepted setting information between the device (11) and the recording controller (106);
a first acquiring module (117b) configured to acquire capacity information indicating first recording capacity of the recording medium on which the device (11) performs simultaneous recording;
a selector (117c) configured to select a first setting method for setting the accepted setting information to the accepted setting target or a second setting method for setting the accepted setting information to the device (11) or the recording controller (106) based on the first recording capacity indicated by the acquired capacity information and second recording capacity of the recording medium (110) on which the recording controller (106) performs simultaneous recording;
a setting module (117d) configured to set the accepted setting information to the accepted setting target when the first setting method is selected, and set the accepted setting information to the device (11) or the recording controller (106) based on the first recording capacity and the second recording capacity when the second setting method is selected; and
a transmitter (117e) configured to transmit the setting information set to the device (11) to the device (11), wherein
the recording controller (106) is configured to record the programs on the channels simultaneously on the recording medium (110) in accordance with the accepted setting information set to the recording controller (106).

2. The recording device (10) of Claim 1, wherein
the first accepting module (117a) is configured to accept channels to be recorded simultaneously by the device (11) and the recording controller (106), and
the setting module (117d) is configured to set the accepted channels to the accepted setting target when the first setting method is selected, and set a channel at a high bit rate among the accepted channels to a first one of the device (11) and the recording controller (106) configured to record the programs on the channels simultaneously on a recording medium having larger recording capacity based on the first recording capacity and the second recording capacity when the second setting method is selected.

3. The recording device (10) of Claim 1 or 2, wherein
the first accepting module (117a) is configured to accept channels to be recorded simultaneously by the device (11) and the recording controller (106), and
the setting module (117d) is configured to set the accepted channels to the accepted setting target when the first setting method is selected, and set, to a first one of the device (11) and the recording controller (106) configured to record the programs on the channels simultaneously on a recording medium having larger recording capacity based on the first recording capacity and the second recording capacity, more channels than channel set to a second one other than the first one of the device (11) and the recording controller (106) when the second setting method is selected.

4. The recording device (10) of one of Claims 1 to 3, wherein
the first accepting module (117a) is configured to accept input of recording time in which simultaneous recording is performed by the device (11) and the recording controller (106), and
the setting module (117d) is configured to set the accepted recording time to the accepted setting target when the first setting method is selected, and set, to a first one of the device (11) and the recording controller (106) configured to record the programs on the channels simultaneously on a recording medium having larger recording capacity based on the first recording capacity and the second recording capacity, longer recording time than recording time set to a second one other than the first one of the device (11) and the recording controller (106) when the second setting method is selected.

5. The recording device (10) of one of Claims 1 to 4, further comprising:
a second acquiring module (117f) configured to acquire first program information indicating the programs on the channels recorded simultaneously by the device (11); and
a display controller (115) configured to display a past program guide in which the acquired first program information and second program information indicating the programs on the channels recorded simultaneously by the recording controller (106) are listed for each channel in chronological order on a display (120).

6. The recording device (10) of Claim 5, wherein the second acquiring module (117f) is configured to acquire the first program information indicating programs on the channels recorded simultaneously in a predetermined time period before and after the first program information listed in the past program guide in addition to the first program information listed in the past program guide.

7. The recording device (10) of Claim 5 or 6 further comprising:
a reproducer (108) configured to reproduce a program input from the recording medium (110) on which the recording controller (106) performs simultaneous recording or from the device (11); and
an input switch (109) configured to read, when the first program information is selected from the first program information and the second program information listed in the past program guide, a program indicated by the selected first program information from the device (11) to input the program to the reproducer (108), and configured to read, when the second program information is selected from the first program information and the second program information listed in the past program guide, a program indicated by the selected second program information from the recording medium (110) on which the recording controller (106) performs simultaneous recording to input the program to the reproducer (108).

8. The recording device (10) of Claim 7, wherein when the device (11) and the recording device (10) are connected via a local area network (LAN) (14) and a high-definition multimedia interface (HDMI) (13), the input switch (109) reads the program indicated by the selected first program information via the HDMI (13) to read the program indicated by the selected first program information from the device (11).

9. A recording method executed in a recording device (10) connected to a device (11) configured to record programs on a plurality of channels simultaneously on a recording medium, the recording method comprising:
recording, by a recording controller (106), programs on a plurality of channels simultaneously on a recording medium (110);
accepting, by a first accepting module (117a), setting information related to simultaneous recording performed by the device (11) and the recording controller (106);
accepting, by a second accepting module (117h), a setting target of the accepted setting information between the device (11) and the recording controller (106);
acquiring, by a first acquiring module (117b), capacity information indicating first recording capacity of the recording medium on which the device (11) performs simultaneous recording;
selecting, by a selector (117c), a first setting method for setting the accepted setting information to the accepted setting target or a second setting method for setting the accepted setting information to the device (11) or the recording controller (106) based on the first recording capacity indicated by the acquired capacity information and second recording capacity of the recording medium (110) on which the recording controller (106) performs simultaneous recording;
setting, by a setting module (117d), the accepted setting information to the accepted setting target when the first setting method is selected, and setting the accepted setting information to the device (11) or the recording controller (106) based on the first recording capacity and the second recording capacity when the second setting method is selected; and
transmitting, by a transmitter (117e), the setting information set to the device (11) to the device (11), wherein
the recording includes recording the programs on the channels simultaneously on the recording medium (110) in accordance with the accepted setting information set to the recording controller (106).
